# EUROPEAN PATENT APPLICATION

(11) **EP 4 458 524 A2**
(43) Date of publication of application: **06.11.2024**
(21) Application number: 24170295.0
(22) Date of filing: 15.04.2024
(51) Int. Cl.: B25J 9/16, B25J 19/02, B25J 19/06, B25J 13/00, B25J 5/00, G05D 1/00, G05B 9/03

(54) **MOBILE ROBOT AND SAFETY CONTROL SYSTEM**

(30) Priority: 13.04.2023 CN 202310390958
(71) Applicant: GD Midea Air-Conditioning Equipment Co., Ltd., Foshan, Guangdong 528311 (CN); KUKA Robotics Guangdong Co., Ltd., Foshan, Guangdong 528311 (CN); Kuka Robotics Manufacturing China Co., Ltd., Xiaokunshan Town Shanghai (CN); Midea Group Co., Ltd., Foshan, Guangdong 528311 (CN)
(72) Inventor: DING, Chengrun, Foshan, 528311 (CN); LIAO, Junfeng, Foshan, 528311 (CN); CHEN, Wenjie, Foshan, 528311 (CN)
(74) Representative: RGTH

(57) **Abstract**

A mobile robot and a safety control system therefor. The safety control system includes a first monitoring circuit (11) to movement data of the mobile robot; a second monitoring circuit (11) to monitor whether the mobile robot collides with an obstacle; a third monitoring circuit (13) to monitor whether an obstacle exists within a preset range; a safety control circuit (14) to generate a first safety instruction based on the movement data, a second safety instruction based on the collision signal, a third safety instruction based on the alarm signal, and a fourth safety instruction based on state information of the safety input device; a servo circuit (15) to receive and execute a corresponding safety instruction; and a main control board to output a drive control signal to the servo circuit, for causing the servo circuit to control a motor of the mobile robot based on the drive control signal.

## Description

### TECHNICAL FIELD

The present disclosure relates to the technical field of safety control of a mobile robot, and in particular to a mobile robot and a safety control system therefor.

### BACKGROUND

With the rapid development of robotics technology, more and more mobile robots are applied and popularized in the industrial and service fields, and there are more and more opportunities for robots to coexist with people in same work scenes. In order to realize a safety control of a robot, it is usually necessary to carry out a safety monitoring on the robot.

In the related art, an external safety Programmable Logic Controller (PLC) is usually applied to realize the safety control, while its system is cumbersome and costly to build. However, general logic circuits cannot meet the safety requirements of the international safety standard ISO-13849-1, such that the design of safety circuits is very complex and difficult and cannot easily meet the safety requirements.

### SUMMARY OF THE DISCLOSURE

The present disclosure provides a mobile robot and a safety control system therefor to solve the above problems of the related art.

In a first aspect, the present disclosure provides a safety control system for a mobile robot; wherein the mobile robot is arranged with at least one mobile device, and the safety control system includes: a first monitoring circuit, configured to monitor a movement state of each of the at least one mobile device, so as to monitor movement data of the mobile robot; a second monitoring circuit, arranged on an outer wall of the mobile robot, and configured to generate a collision signal in response to the mobile robot colliding with an obstacle; a third monitoring circuit, configured to monitor whether an obstacle exists within a preset range of the mobile robot and to generate an alarm signal in response to the existence of the obstacle being monitored; a safety control circuit, connected to the first monitoring circuit, the second monitoring circuit, the third monitoring circuit, and a safety input device of the mobile robot, and configured to generate a first safety instruction based on the movement data, a second safety instruction based on the collision signal, a third safety instruction based on the alarm signal, and a fourth safety instruction based on state information of the safety input device; a servo circuit, connected to the safety control circuit, and configured to receive and execute the first safety instruction, the second safety instruction, the third safety instruction, or the fourth safety instruction output by the safety control circuit; and a main control board, connected to the servo circuit, and configured to output a drive control signal to the servo circuit to cause the servo circuit to control a motor of the mobile robot based on the drive control signal.

In a second aspect, the present disclosure provides a mobile robot, including: a main body; at least one mobile device, arranged at a bottom or a top of the main body and configured to drive the mobile robot to move in a horizontal direction or a gravity direction; and the safety control system as above, configured to monitor the movement state of each of the at least one mobile device, so as to monitor the movement data of the mobile robot to generate the first safety instruction, and/or to monitor whether the mobile robot collides with an obstacle to generate the second safety instruction, and/or to monitor whether an obstacle exists within the preset range of the mobile robot to generate the third safety instruction, and/or to generate the fourth safety instruction based on the state information of the safety input device of the mobile robot, and/or to control the motor of the mobile robot to execute a corresponding safety instruction based on the first safety instruction and/or the second safety instruction and/or the third safety instruction and/or the fourth safety instruction.

Different from the related art, in the present disclosure, the safety control system is arranged with multiple monitoring circuits and the safety control circuit, which may realize monitoring of the movement state of the mobile robot, whether a collision occurs, and whether an obstacle exists in the preset range, etc., so as to improve the reliability of the safety control of the mobile robot through the multiple monitoring. Moreover, the safety control circuit in the safety control system of the present disclosure may be directly connected to the main control board and the servo circuit, which may improve the integration degree of the safety control system, simplify the complicated circuitry of the safety control system 1, and reduce the production cost.

### BRIEF DESCRIPTION OF THE DRAWINGS

In order to illustrate the technical solutions more clearly in the embodiments of the present disclosure, the following will briefly describe the accompanying drawings required in the description of the embodiments, and it is obvious that the following description of the accompanying drawings are only some of the embodiments of the present disclosure. For those skilled in the art, other accompanying drawings may be obtained from these drawings without creative labor.
FIG. 1 is a structural schematic diagram of a safety control system for a mobile robot according to a first implementation of the present disclosure.
FIG. 2 is a structural schematic diagram of a safety control system for a mobile robot according to a second implementation of the present disclosure.
FIG. 3 is a structural schematic diagram of a safety control system for a mobile robot according to a third implementation of the present disclosure.
FIG. 4 is a structural schematic diagram of a safety control system for a mobile robot according to a fourth implementation of the present disclosure.
FIG. 5 is a structural schematic diagram of a safety control system for a mobile robot according to a fifth implementation of the present disclosure.
FIG. 6 is a structural schematic diagram of a safety control system for a mobile robot according to a sixth implementation of the present disclosure.
FIG. 7 is a structural schematic diagram of a safety control system for a mobile robot according to a seventh implementation of the present disclosure.
FIG. 8 is a structural schematic diagram of a mobile robot according to some embodiments of the present disclosure.

### DETAILED DESCRIPTION

In order to enable those skilled in the art to better understand the technical solutions of the present disclosure, a mobile robot and a safety control system therefor provided herein are described in further detail below in connection with the accompanying drawings and specific embodiments. It is to be understood that the described embodiments are only a part of the embodiments of the present disclosure, and not all of the embodiments. Based on the embodiments in the present disclosure, all other embodiments obtained by those skilled in the art without creative labor fall within the scope of the present disclosure.

The terms "first", "second", and the like in the present disclosure are intended to distinguish between different objects, and are not to describe a particular order. In addition, the terms "including" and "having" and any variations thereof are intended to cover non-exclusive inclusion. For example, a process, method, system, product, or apparatus including a series of steps or units is not limited to the listed steps or units, but optionally further includes steps or units that are not listed, or optionally includes other steps or units that are inherent to the process, method, product, or apparatus.

Distinguishing from the related art in which a safety PLC is usually applied to realize safety control of a robot, the present disclosure builds a safety control system. In particular, the present disclosure takes a mobile robot as an example to illustrate how the safety control system can safely control a mobile robot.

Currently, a mobile robot is usually arranged with multiple mobile devices, and the mobile devices are configured to drive the mobile robot to move in a horizontal direction or a gravity direction. For example, the mobile robot is arranged with a left wheel and a right wheel, the left wheel and the right wheel being driven by a motor, and the rotation speed and steering of the left wheel and the right wheel are specifically adjusted to adjust the moving speed and the moving direction of the mobile robot, i.e., the left wheel and the right wheel are configured to drive the mobile robot to move in a horizontal direction. For example, when the rotation speed of the left wheel is less than the rotation speed of the right wheel and the steering of the left wheel is consistent with the steering of the right wheel, the mobile robot is driven to move in a left turn.

In addition, since the mobile robot is further configured to carry goods to a corresponding location for unloading, most of the mobile robots are arranged with a lifting device to assist in loading and unloading of the goods. The loading and unloading direction of the goods carries by the mobile robot can be adjusted by adjusting the height and the rotation angle of the lifting device, i.e., the lifting device is configured to drive the mobile robot to move in the gravity direction.

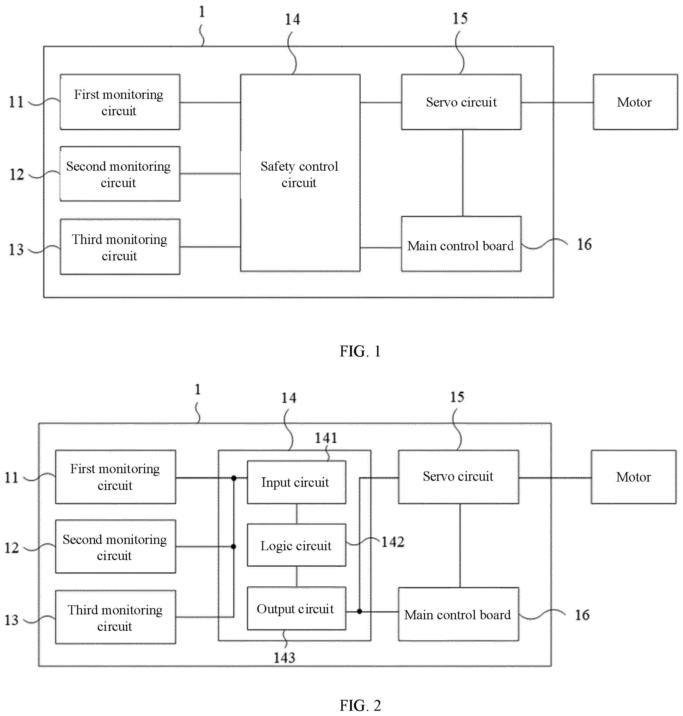

Referring to FIG. 1, FIG. 1 is a structural schematic diagram of a safety control system for a mobile robot according to a first implementation of the present disclosure. As shown in FIG. 1, the safety control system 1 includes a first monitoring circuit 11, a second monitoring circuit 12, a third monitoring circuit 13, a safety control circuit 14, a servo circuit 15, and a main control board 16.

Specifically, the main control board 16 is connected to the servo circuit 15, for outputting a drive control signal to the servo circuit 15 to cause the servo circuit 15 to control a motor of the mobile robot based on the drive control signal. The main control board 16 generates a corresponding drive control signal based on a working mode of the robot. In some embodiments, the mobile robot may be arranged with a control panel, and an operator may select the working mode of the mobile robot through the control panel. For example, the operator may select a preset moving speed, a preset moving distance, etc. of the mobile robot, in order to determine a moving trajectory of the mobile robot for selecting the corresponding working mode.

The first monitoring circuit 11 is configured to monitor a movement state of the multiple mobile devices to monitor movement data of the mobile robot. For example, when the mobile devices are a left wheel and a right wheel, it is necessary to monitor the rotation speed and the steering of the left wheel and the right wheel, and the current movement state of the mobile robot can be determined according to the rotation speed and the steering of the left wheel and the right wheel. Alternatively, when the mobile devices are a lifting device, it is necessary to monitor the lifting height and the rotation angle of the lifting device, and the current movement state of the mobile robot can be determined according to the lifting height and the rotation angle of the lifting device.

By monitoring the movement data of the mobile robot, it can be determined whether the movement state of the mobile robot is abnormal, such that the safe speed monitoring of the mobile robot can be realized for safe control when the mobile robot is in an abnormal state.

The second monitoring circuit 12 is arranged on an outer wall of the mobile robot. The second monitoring circuit 12 is configured to monitor whether the mobile robot collides with an obstacle, generate a collision signal when the mobile robot collides with the obstacle, and carry out a safety control according to the collision signal, so as to prevent the mobile robot from colliding with the obstacle for a second time or even for multiple times, thereby realizing a safe touching detection on the mobile robot and thus improving the safety and reliability of the mobile robot.

In some embodiments, the second monitoring circuit 12 may be a pressure-type sensor, and may include at least one of a touch sensor and a collision bar. The second monitoring circuit 12 may be specifically arranged around a surface of a housing of the mobile robot, for realizing collision detection on the mobile robot in a 360° spatial direction, thereby improving the safety control effect of the mobile robot, and thus improving the safety performance of the mobile robot.

The third monitoring circuit 13 is configured to monitor whether an obstacle exists within a preset range of the mobile robot, and to generate an alarm signal when the obstacle is monitored to exist. For example, the third monitoring circuit is configured to monitor whether an obstacle exists on a moving path of the mobile robot, and generate the alarm signal when an obstacle is determined to be located on the moving path of the mobile robot and to have a distance from the mobile robot less than a preset range.

In some embodiments, the preset range may be selected based on the working mode of the mobile robot, i.e., when the mobile robot is in a moving state, it is necessary to determine whether an obstacle exists in front of the mobile robot on the moving path, and the moving speed of the mobile robot may be proportional to the preset range. When the mobile robot is in a rotating state, it is necessary to determine whether an obstacle exists within the preset range centered on the mobile robot.

In the present embodiments, obstacle monitoring can be carried out through the third monitoring circuit 13 to prevent collision, and the monitoring area of the third monitoring circuit 13, i.e., the preset range, is switchable, which improves the applicability of the third monitoring circuit 13.

The safety control circuit 14 is connected to the first monitoring circuit 11 and the servo circuit 15 for generating a first safety instruction based on the movement data obtained by the first monitoring circuit 11, so as to cause the servo circuit 15 to receive and execute the first safety instruction, and then perform a drive control on the motor of the mobile robot.

In some embodiments, since the first monitoring circuit 11 is configured to monitor the current state of the mobile robot, i.e., to monitor its own movement, when the mobile robot is monitored to be in an abnormal movement, for example, when the mobile robot is in over-speed, the safety control circuit 14 may output the first safety instruction to control the motor to decelerate or shut down, i.e., to perform a corresponding Safe Torque Off (STO) control.

The safety control circuit 14 is further connected to the second monitoring circuit 12 for generating a second safety instruction based on the collision signal generated by the second monitoring circuit 12, so as to cause the servo circuit 15 to receive and execute the second safety instruction, and then perform a drive control on the motor of the mobile robot.

In some embodiments, since the second monitoring circuit 12 is configured to monitor whether a collision occurs in the mobile robot, and it is necessary to control the mobile robot to immediately stop the movement when the collision of the mobile robot is monitored to occur, the safety control circuit 14 outputs the second safety instruction for realizing holding brake of the motor.

The safety control circuit 14 is further connected to the third monitoring circuit 13 for generating a third safety instruction based on the alarm signal generated by the third monitoring circuit 13, so as to cause the servo circuit 15 to receive and execute the third safety instruction, and then perform a drive control on the motor of the mobile robot.

In some embodiments, since the third monitoring circuit 13 is configured to monitor whether an obstacle exists in the preset range, and the preset range is set and switched based on the operating modes, i.e., the third safety instruction generated by the safety control circuit 14 is different in different operating modes.

For example, when the mobile robot is in a moving state, and it is determined that an obstacle exists in the preset range, it is necessary to control the mobile robot to decelerate to a less moving speed, which may be a speed at which the mobile robot will not cause injury to the obstacle in the event of a collision between the mobile robot and the obstacle or at which the mobile robot will not be tipped over after the collision; alternatively, it is necessary to control the mobile robot to decelerate to a stopped state.

Accordingly, the third safety instruction generated by the safety control circuit 14 based on the warning signal may include a safety torque-off control or a safety holding brake control, etc.

The safety control circuit 14 is further connected to a safety input device for generating a fourth safety instruction based on state information of the safety input device, so as to cause the servo circuit 15 to receive and execute the fourth safety instruction, and then perform a drive control on the motor of the mobile robot.

In some embodiments, the safety input device may include an emergency stop switch, a safety door, an enable switch, a reset button, a start button, a mode selection switch, an obstacle detection shielding switch, or other input devices for monitoring the safety performance of the industrial robot. The safety control circuit 14 may be accessed to multiple safety input devices to realize different functions.

For example, when the safety control circuit 14 is accessed to an emergency stop switch, the operator may generate the fourth safety instruction by pressing the emergency stop switch when the mobile robot collides with an obstacle or when any urgent situation occurs, and the safety control circuit 14 controls the mobile robot to stop moving based on the fourth safety instruction.

When the safety control circuit 14 is connected to an enable switch or a start button, the operator may generate the fourth safety instruction by pressing the relevant switch, and the safety control circuit 14 then controls the mobile robot to start or controls the mobile robot to enable or controls the mobile robot to disable based on the fourth safety instruction.

In some embodiments, the enable switch may be adopted with a 3-State Enable operator, which is required to be continuously pressed to realize operation. In this way, the operator may press the button to the end or release the button in an emergency to stop the mobile robot, which may effectively improve the reliability and timeliness of the safety control of the mobile robot.

The safety control system 1 includes the first monitoring circuit 11, second monitoring circuit 12, and third monitoring circuit 13 with different monitoring functions, which may realize a more comprehensive perception and monitoring of the mobile robot and its movement environment. When the different monitoring circuits generate corresponding monitoring signals, corresponding safety instructions are output through the safety control circuit 14, which then controls the servo circuit 15 to perform the corresponding safety protection behaviors, thereby improving the reliability of the safety control of the mobile robot.

In addition, the safety control system 1 may realize safety control integration without the need for external safety PLC and other equipment, and is capable of meeting the safety standard requirements of Category 3 (CAT3) and Performance Level d (PLD). Moreover, the safety control system 1 can be integrated in a control cabinet of the mobile robot, which has the advantage of high integration as well as small size.

In addition, all of the monitoring circuits, the safety control circuit 14, and the servo circuit 15 of the present embodiments are pure hardware logic circuits, which may improve the response speed of the circuits and shorten the development cycle and the certification cycle. Moreover, devices such as programmable logic controllers (PLCs), microprocessors (CPUs), microcontrollers (MCUs), etc. are not adopted herein, and software and/or firmware support is not required, which may substantially reduce the production costs.

Further, the safety control circuit 14 may further be directly connected to the main control board 16. The safety control circuit 14 is further configured to report the first safety instruction, the second safety instruction, the third safety instruction, and/or the fourth safety instruction generated to the main control board 16, and the main control board 16 disables the servo circuit 15 based on the different safety instructions, i.e., stops an enabling output of the servo circuit 15.

In some embodiments, the first safety instruction, the second safety instruction, the third safety instruction, and/or the fourth safety instruction may include an STO shutdown instruction. Differentiated from receiving a disable instruction, the servo circuit 15 in the STO shutdown state still receives the enabling output of the main control board 16, and when the mobile robot completes the safety shutdown and its faults are resolved, the servo circuit 15 may directly control the mobile robot to start up, in which case the servo circuit 15 is able to operate normally without a power loss.

In conjunction with FIG. 1, referring further to FIG. 2, FIG. 2 is a structural schematic diagram of a safety control system for a mobile robot according to a second implementation of the present disclosure. As shown in FIG. 2, the safety control circuit 14 includes an input circuit 141, a logic circuit 142, and an output circuit 143.

The input circuit 141 is connected to the safety input device for obtaining the state information of the safety input device. Specifically, the state information of the safety input device may specifically be a pressing state of the safety input device.

As the safety input devices are of different categories, their input signals are also different, and some of the safety input devices are required to receive a test outputted by the safety control circuit 14 and generate a feedback signal accordingly. The feedback signal may characterize the state information of the safety input device. Alternatively, some of the safety input devices may generate their own signals, and the signals input to the safety control circuit 14 may characterize the state information of the safety input devices.

The logic circuit 142 is connected to the input circuit 141 for generating the fourth safety instruction based on the state information of the safety input device. In some embodiments, the input circuit 141 may receive input signals of the safety input device through dual channels, and the logic circuit 142 is further connected to the input circuit 141 to perform a logical comparison based on the input signals of the dual channels, thereby realizing a state determination on the safety input device and generating a corresponding fourth safety instruction.

In other embodiments, the logic circuit 142 may be further connected to the input circuit 141 through dual channels to realize a dual-redundant detection on the input signals, thereby improving the safety control reliability of the mobile robot. In this way, the mobile robot to which the safety control system 1 is applied may comply with the international safety standard ISO-13849-1 by arranging the logic circuit 142 with the dual-redundant structure, thereby improving the safety level of the mobile robot.

The output circuit 143 is connected to the logic circuit 142 and the servo circuit 15 for transmitting the fourth safety instruction to the servo circuit 15. In some embodiments, the output circuit 143 may be a simple logic circuit 142. Alternatively, in other embodiments, the logic circuit 142 may be directly connected to the servo circuit 15.

Further, the output circuit 143 is connected to the main control board 16. The logic circuit 142 is configured to generate the fourth safety instruction in response to the state information of the safety input device being a hazardous trigger state, a faulty state, or a misconnected state, and to transmit the fourth safety instruction to the output circuit 143 and to the main control board 16.

The output circuit 143 is further configured to transmit the fourth safety instruction to the servo circuit 15, for causing the servo circuit 15 to execute the first safety instruction to further control the mobile robot to stop. The logic circuit 142 is further configured to upload the state information to the main control board 16 of the mobile robot. In response to the state information being a faulty state or a misconnected state, the main control board 16 generates an alarm message to enable a user to view the safety input device based on the alarm message and correspondingly troubleshoot the safety input device.

Alternatively, the logic circuit 142 is further configured to determine whether the input circuit 141 is faulty and to report fault information of the input circuit 141 to the main control board 16 of the mobile robot, for causing the main control board 16 to disable the servo circuit 15 in the event of a fault in the input circuit 141.

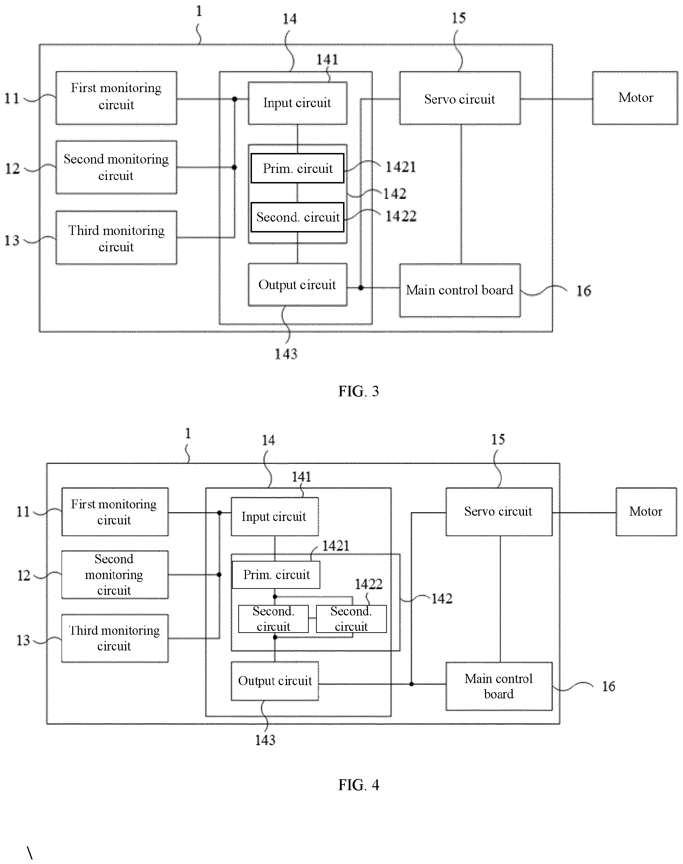

Combining FIGS. 1 and 2, and referring further to FIG. 3, FIG. 3 is a structural schematic diagram of a safety control system for a mobile robot according to a third implementation of the present disclosure. As shown in FIG. 3, the logic circuit 142 includes a primary circuit 1421 and a secondary circuit 1422.

Specifically, the primary circuit 1421 is connected to the input circuit 141 for integrating and processing the state information of the safety input device. In some embodiments, the primary circuit 1421 may be connected to the input circuit 141 through dual channels for receiving two input signals and cross-verifying the two input signals. In some embodiments, the number of the primary circuits 1421 may be two, each of the primary circuits 1421 being separately connected to the input circuit 141. The two primary circuits 1421 are connected to each other for receiving and cross-verifying the input signals.

By arranging the primary circuits 1421 with the dual-redundant structure, the mobile robot to which the safety control system 1 is applied may comply with the international safety standard ISO-13849-1, thereby improving the safety level of the mobile robot.

The primary circuit 1421 may perform a parallel-serial conversion on the state information of multiple safety input devices. The state information of each safety input device may be a pulse signal, the multiple pulse signals have different waveforms. The primary circuit 1421 may integrate the multiple pulse signals to output a signal containing information of the multiple pulse signals.

The secondary circuit 1422 is connected to the primary circuit 1421 and the output circuit 143, for generating the fourth safety instruction based on the state information and transmitting the fourth safety instruction to the output circuit 143.

The secondary circuit 1422 is configured to receive the signal output from the primary circuit 1421, and determine whether the signal is the same as a signal formed by integrating multiple pulse signals in a normal state. In response to the signal being different from the signal formed by integrating multiple pulse signals in the normal state, which indicates that the state information of at least one of the safety input devices is changed, the secondary circuit 1422 generates the fourth safety instruction. Further, the secondary circuit 1422 may be further configured to determine of which safety input device the state information is changed.

In conjunction with FIGS. 1-FIG. 3, referring further to FIG. 4, FIG. 4 is a structural schematic diagram of a safety control system for a mobile robot according to a fourth implementation of the present disclosure. As shown in FIG. 4, the number of the secondary circuits 1422 is two, and each secondary circuit 1422 is connected to the primary circuit 1421 and the output circuit 143. The two secondary circuits 1422 are connected to each other for cross-verifying the received signal output from the primary circuit 1421.

By arranging the secondary circuits 1422 with the dual-redundant structure, the mobile robot to which the safety control system 1 is applied may comply with the international safety ISO-13849-1, thereby improving the safety level of the mobile robot.

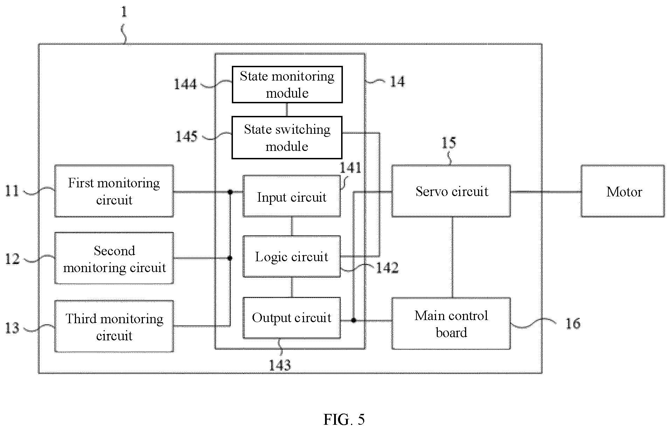

Combining FIGS. 1 and 3, and referring further to FIG. 5, FIG. 5 is a structural schematic diagram of a safety control system for a mobile robot according to a fifth implementation of the present disclosure. As shown in FIG. 5, the safety control circuit 14 further includes a state monitoring module 144 and a mode switching module 145.

The state monitoring module 144 is configured to monitor an operating state of the mobile robot to generate a mode switching signal based on the operating state of the mobile robot; the mode switching module 145 is connected to the state monitoring module 144 and the logic circuit 142, the mode switching module 145 is configured to generate a mode signal based on the mode switching signal, and the logic circuit 142 is configured to generate the fourth safety instruction based on the mode signal and the state information of the safety input device.

Specifically, the operating state of the mobile robot may include a stationary sate, an accelerated state, or a started state, etc., and the state monitoring module 144 may determine which state the mobile robot is in by monitoring the operating state of the mobile robot, or further determine that the mobile robot is about to undergo a state switching, etc., and generate corresponding mode switching signals based on different state switching as well as different operating states.

Further, when the mode switching module 145 receives different mode switching signals, the mode switching module 145 can determine whether a state change has occurred, and at the same time the mode switching module 145 receives the state information of the safety input device. The fourth safety instruction is generated based on the above two.

For example, in a case where the state monitoring module 144 monitors that the mobile robot is currently in a state of high-speed movement, and the logic circuit 142 receives the state information of the safety input device indicating that the safety input device has been triggered, such as an emergency stop device has been triggered, if an emergency stop signal is generated directly based on the triggering of the emergency stop device, the mobile robot will perform an emergency stop operation, which results in a rollover, etc., causing injury to passing pedestrians. Therefore, it is necessary to generate the fourth safety instruction by combining the current operating state of the mobile robot and the state information of the safety input device.

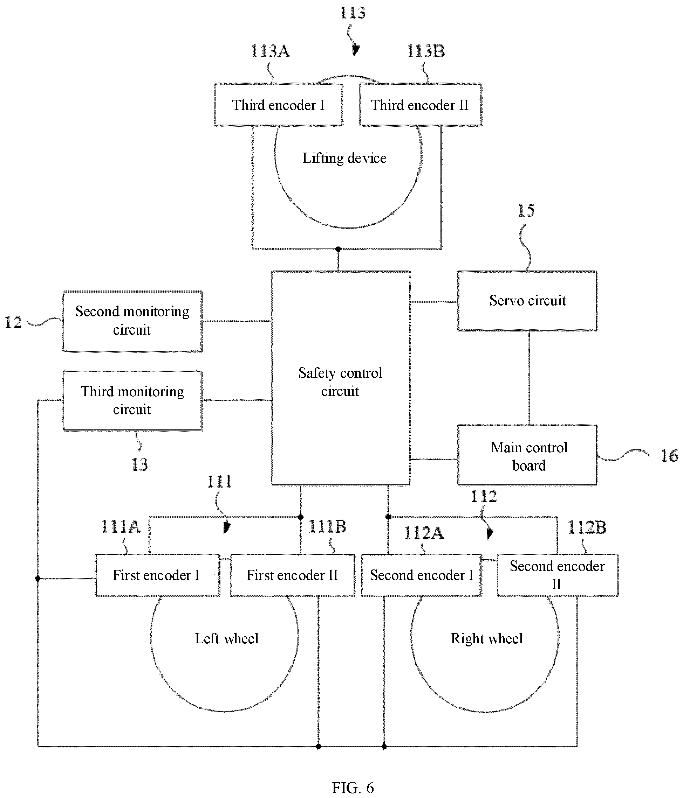

In conjunction with FIG. 1, referring to FIG. 6, FIG. 6 is a structural schematic diagram of a safety control system for a mobile robot according to a sixth implementation of the present disclosure. As shown in FIG. 6, the first monitoring circuit 11 includes a first encoder 111 and a second encoder 112.

In a case where the mobile robot includes a left wheel and a right wheel, the first encoder 111 and the second encoder 112 may be configured to monitor the left wheel and the right wheel, respectively, in order to obtain movement speed information, position information, and direction information of the mobile robot.

In some embodiments, the first monitoring circuit 11 includes multiple encoders, and two of the multiple encoders are configured to monitor the movement state of the same mobile device. Specifically, the number of the first encoders 111 may be two, and the number of the second encoders 112 may be two, which may be defined as a first encoder I 111A and a first encoder II 111B, and a second encoder I 112A and a second encoder II 112B. The first encoder I 111A and the first encoder II 111B have respective independent read heads which are arranged on the same PCB; while the second encoder I 112A and the second encoder II 112B have respective independent read heads which are arranged on the same PCB. In the present embodiments, the data of the left wheel and the right wheel may each be monitored by means of dual encoders, which may prevent the first monitoring circuit 11 from being unable to receive the moving information of the left wheel and/or the right wheel when an error occurs in any of the encoders. In this way, the first monitoring circuit 11 may be able to safely control the left wheel and/or the right wheel, thereby improving the reliability of the safety control of the mobile robot.

The first encoder 111 is configured to output a first test pulse signal to the left wheel, and the left wheel is configured to return the moving information of the left wheel based on the first test pulse signal; the second encoder 112 is configured to output a second test pulse signal to the right wheel, and the right wheel is configured to return the moving information of the right wheel based on the second test pulse signal.

Further, the first monitoring circuit 11 includes a third encoder 113. In a case where the mobile robot includes a lifting device, the third encoder 113 is configured to monitor the lifting device to obtain a lifting height and a rotation angle of the lifting device.

In some embodiments, the first monitoring circuit 11 includes multiple encoders, and two of the multiple encoders are configured to monitor the movement state of the same mobile device. Specifically, the number of the third encoders 113 may be two, which may be defined as a third encoder I 113A and a third encoder II 113B. The third encoder I 113A and the third encoder II 113B have respective independent read heads which are arranged on the same PCB. In the present embodiments, the data of the lifting device may be monitored by means of dual encoders, which may prevent the first monitoring circuit 11 from being unable to receive the moving information of the lifting device when an error occurs in any of the encoders. In this way, the first monitoring circuit 11 may be able to safely control the lifting device, thereby improving the reliability of the safety control of the mobile robot.

By arranging the first monitoring circuit 11 with the dual-redundant structure, the mobile robot to which the safety control system 1 is applied may comply with the international safety standard ISO-13849-1, thereby improving the safety level of the mobile robot.

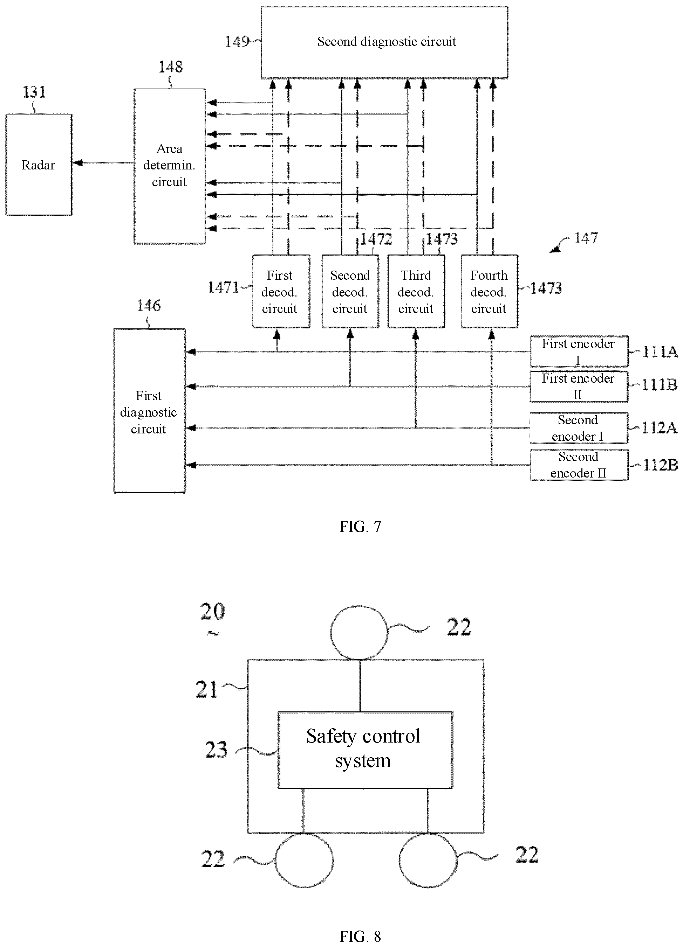

In conjunction with FIG. 6, further referring to FIG. 7, FIG. 7 is a structural schematic diagram of a safety control system for a mobile robot according to a seventh implementation of the present disclosure. As shown in FIG. 7, the safety control circuit 14 further includes a first diagnostic circuit 146, a decoding circuit 147, a second diagnostic circuit 149, and an area determination circuit 148.

The first diagnostic circuit 146 is connected to the first encoder 111 and the second encoder 112 to monitor the movement state of the left wheel and the right wheel based on the monitoring data of the first encoder 111 and the monitoring data of the second encoder 112.

Since the first encoder I 111A, first encoder II 111B, second encoder I 112A, and second encoder II 112B are arranged, specifically, the first diagnostic circuit 146 is connected to the first encoder I 111A, the first encoder II 111B, the second encoder I 112A, and the second encoder II 112B, respectively.

The monitoring data of the first encoder 111 and the second encoder 112 each include rotation speed information and steering information, such that the first diagnostic circuit 146 is capable of determining a first rotation angle and a first rotation speed of the left wheel based on the monitoring data from each of the first encoder I 111A and the first encoder II 111B, and determining a second rotation angle and a second rotation speed of the right wheel based on the monitoring data from each of the second encoder I 112A and the second encoder II 112B.

Further, since the movement of the wheel is mainly controlled by the rotation angle and the rotation speed, and the first diagnostic circuit 146 is capable of obtaining the two rotation angles and rotation speeds of the left wheel and the two rotation angles and the rotation speeds of the right wheel, the monitoring of each wheel can be carried out by comparing the rotation angles and the rotation speeds of the corresponding wheel.

Specifically, the first diagnostic circuit 146 compares the two first rotation angles, and determines that both the first encoder I 111A and the first encoder II 111B are normal and that each of the two first rotation angles is an actual rotation angle of the left wheel in response to the two first rotation angles being the same. Alternatively, in response to the two first rotation angles being different, the first diagnostic circuit 146 determines that the first encoder I 111A or the first encoder II 111B is abnormal.

The first diagnostic circuit 146 compares the two second rotation angles, and determines that the second encoder I 112A and the second encoder II 112B are normal and that each of the two second rotation angles is an actual rotation angle of the right wheel in response to the two second rotation angles being the same. Alternatively, in response to the two second rotation angles being different, the first diagnostic circuit 146 determines that the second encoder I 112A or the second encoder II 112B is abnormal.

The first diagnostic circuit 146 compares the two first rotation speeds and further calculates a difference between the two first rotation speeds; in response to the difference between the two first rotation speeds being less than a predetermined threshold, the first diagnostic circuit 146 determines that both the first encoder I 111A and the first encoder II 111B are normal. Alternatively, in response to the difference between the two first rotation speeds being greater than or equal to the predetermined threshold, the first diagnostic circuit 146 determines that the first encoder I 111A or the first encoder II 111B is abnormal.

The first diagnostic circuit 146 compares the two second rotation speeds and further calculates a difference between the two second rotation speeds; in response to the difference between the two second rotation speeds being less than the predetermined threshold, the first diagnostic circuit 146 determines that both the second encoder I 112A and the second encoder II 112B are normal. Alternatively, in response to the difference between the two second rotation speeds being greater than or equal to the predetermined threshold, the first diagnostic circuit 146 determines that the second encoder I 112A or the second encoder II 112B is abnormal.

In the present embodiments, both the rotation speed difference threshold of the left wheel and the rotation speed difference threshold of the right wheel are set to be the predetermined threshold, thereby improving the consistency of the safety monitoring and thus improving the safety and reliability of the safety monitoring of the whole device.

As shown in FIG. 7, the decoding circuit 147 is connected to the first encoder I 111A, the first encoder 111B, the second encoder I 112A, and the second encoder II 112B, for decoding the monitoring data of the first encoder I 111A and the first encoder II 111B to obtain a speed signal and a direction signal of the left wheel, and for decoding the monitoring data of the second encoder I 112A and the second encoder II 112B to obtain a speed signal and a direction signal of the right wheel. Specifically, the decoding circuit 147 is configured to decode the monitoring data of the first encoder I 111A, the monitoring data of the first encoder II 111B, the monitoring data of the second encoder I 112A, and the monitoring data of the second encoder II 112B, in order to obtain the corresponding speed signals and the direction signals, where the speed signals and the direction signals are of different signal types. Specifically, the speed signals are analog signals and the direction signals are digital signals.

Specifically, the decoding circuit 147 includes a first decoding circuit 1471, a second decoding circuit 1472, a third decoding circuit 1473, and a fourth decoding circuit 1474. The first decoding circuit 1471 is connected to the first encoder I 111A, the second decoding circuit 1472 is connected to the first encoder II 111B, the third decoding circuit 1473 is connected to the second encoder I 112A, and the fourth decoding circuit 1474 is connected to the second encoder II 112B.

As shown in FIG. 7, the second diagnostic circuit 149 is connected to the decoding circuit 147 for determining whether the left wheel is abnormal based on the speed signal and/or the direction signal of the left wheel, determining whether the right wheel is abnormal based on the speed signal and/or the direction signal of the right wheel, and determining whether the mobile robot is over-speeding based on the speed signal of the left wheel and the speed signal of the right wheel.

In some embodiments, the second diagnostic circuit 149 is configured to determine the rotation angle of the left wheel based on the direction signal of the left wheel, and determines the rotation speed of the left wheel based on the speed signal of the left wheel.

The second diagnostic circuit 149 compares the two rotation angles of the left wheel, and determine that both the first encoder I 111A and the first encoder II 111B are normal and that each of the two rotation angles is the actual rotation angle of the left wheel in response to the two rotation angles of the left wheel being the same. Alternatively, in response to the two rotation angles of the left wheel being different, the second diagnostic circuit 149 determines that the first encoder I 111A or the first encoder II 111B is abnormal.

The second diagnostic circuit 149 compares the two rotation speeds of the left wheel and further calculates a difference in the two rotation speeds of the left wheel; in response to the difference in the two rotation speeds of the left wheel being less than a predetermined threshold, the second diagnostic circuit 149 determines that both the first encoder I 111A and the first encoder II 111B are normal. Alternatively, in response to the difference in the two rotation speeds of the left wheel being greater than or equal to the predetermined threshold, the second diagnostic circuit 149 determines that the first encoder I 111A or the first encoder II 111B is abnormal.

Specifically, the second diagnostic circuit 149 determines the rotation angle of the right wheel based on the direction signal of the right wheel, and determines the rotation speed of the right wheel based on the speed signal of the right wheel.

The second diagnostic circuit 149 compares the two rotation angles of the right wheel, and determines that both of the second encoder I 112A and the second encoder II 112B are normal and that each of the two rotation angles is the actual rotation angle of the right wheel in response to the two rotation angles of the right wheel being the same. Alternatively, in response to the two rotation angles of the right wheel being different, the second diagnostic circuit 149 determines that the second encoder I 112A or the second encoder II 112B is abnormal.

The second diagnostic circuit 149 compares the two rotation speeds of the right wheel and further calculates a difference in the two rotation speeds of the right wheel; in response to the difference in the two rotation speeds of the right wheel being less than the predetermined threshold, the second diagnostic circuit 149 determines that both the second encoder I 112A and the second encoder II 112B are normal. Alternatively, in response to the difference in the two rotation speeds of the right wheel being greater than or equal to the predetermined threshold, the second diagnostic circuit 149 determines that the second encoder I 112A or the second encoder II 112B is abnormal.

In other embodiments, the second diagnostic circuit 149 compares the rotation speed of the left wheel with the rotation speed of the right wheel and calculates a difference between the rotation speed of the left wheel and the rotation speed of the right wheel, and determines that the mobile robot is over-speeding in response to the difference between the rotation speed of the left wheel and the rotation speed of the right wheel being greater than the predetermined threshold.

As shown in FIG. 7, the third monitoring circuit 13 includes a radar 131 for non-contact monitoring of an obstacle. In some embodiments, the radar is configured to emit a pulsed laser and receive a reflected light from the pulsed laser to determine whether an obstacle exists within a preset range of the mobile robot based on the reflected light.

The area determination circuit 148 is connected to the decoding circuit 147 for generating area information based on the speed signal and direction signal of the left wheel and the speed signal and direction signal of the right wheel. The radar 131 is connected to the area determination circuit 148 for switching a preset range of the mobile robot based on the area information. The switching of the preset range (preset area) described herein may be related to a working environment of the mobile robot.

The area determination circuit 148 is connected to the first decoding circuit 1471, the second decoding circuit 1472, the third decoding circuit 1473, and the fourth decoding circuit 1474, respectively.

Since a moving distance of the mobile robot is determined by the moving speed as well as steering, the area determination circuit 146 is required to receive the decoded speed signal and direction signal of the left wheel, and the decoded speed signal and direction signal of the right wheel.

Specifically, the area determination circuit 148 is configured to generate the area information based on output signals of the first decoding circuit 1471, the second decoding circuit 1472, the third decoding circuit 1473, and the fourth decoding circuit 1474. In some embodiments, a map of a current working area may be stored in the area determination circuit 148, and different areas on the map correspond to different moving distances. The moving distance may be calculated by the rotation speed, steering, and moving duration.

The output signal of the first decoding circuit 1471 and the output signal of the second decoding circuit 1472 are data characterizing the moving distance of the left wheel of the mobile robot, and only one of the two is required to be selected; the output signal of the third decoding circuit 1473 and the output signal of the fourth decoding circuit 1474 are data characterizing the moving distance of the right wheel of the mobile robot, and only one of the two is required to be selected.

In other embodiments, the area determination circuit 148 may further include a first area determination circuit and a second area determination circuit.

The first area determination circuit is connected to the first decoding circuit 1471 and the third decoding circuit 1473, and configured to generate first area information based on the decoded speed signal and direction signal of the left wheel from the first decoding circuit 1471 and the decoded speed signal and the direction signal of the right wheel from the third decoding circuit 1473.

The second area determination circuit is connected to the second decoding circuit 1472 and the fourth decoding circuit 1474, and configured to generate second area information based on the decoded speed signal and direction signal of the left wheel from the second decoding circuit 1472 and the decoded speed signal and direction signal of the right wheel from the fourth decoding circuit 1474.

Further, the radar 131 is connected to the first area determination circuit and the second area determination circuit, for generating a fault diagnosis signal based on the first area information and the second area information.

The radar 131 is configured to cross-verify the first area information and the second area information, and determine whether the first area information and the second area information are the same. When the first area information and the second area information are the same, it is proved that the detection calculation results of the first area determination circuit and the second area determination circuit are consistent, i.e., the area corresponding to the first area information or the second area information is the area in which the mobile robot is currently located. Since different obstacles exist in different areas, the switching of the obstacle detection area may be realized by determining the area in which the mobile robot is currently located.

When the first area information and the second area information are not the same, it is proved that the detection calculation results of the first area determination circuit and the second area determination circuit are inconsistent, in which case the first area information and the second area information are not credible. This may be caused by that the first area determination circuit and/or the second area determination circuit are abnormal, or that at least one of the first decoding circuit 1471, the second decoding circuit 1472, the third decoding circuit 1473, and the fourth decoding circuit 1474 is abnormal.

In some embodiments, the radar 131 may be connected to the first area determination circuit and the second area determination circuit through a communication bus to realize data transmission.

In addition, the radar 131 may be connected to the first encoder 111 and the second encoder 112 through a processing circuit, and the moving distance of the mobile robot under a certain movement duration may be calculated and obtained through the processing circuit. Further, the map of the current working area may be stored in the processing circuit, and different areas on the map correspond to different moving distances. Therefore, the current area of the mobile robot can be determined by comparing the current moving distance and an initial position of the mobile robot. In this way, the switching to a preset range, i.e., a monitoring area may be realized through the radar based on an output signal of the processing circuit.

In the present disclosure, the safety control system 1 is arranged with multiple monitoring circuits and the safety control circuit 14, which may realize monitoring of the movement state of the mobile robot, whether a collision occurs, and whether an obstacle exists in the preset range, etc., so as to improve the reliability of the safety control of the mobile robot through the multiple monitoring. In addition, multiple dual-redundant circuits may improve the accuracy of the data obtained and calculated by the safety control system 1, such that the mobile robot to which the safety control system 1 is applied may comply with the international safety standard ISO-13849-1, thereby improving the safety level of the mobile robot.

Moreover, the safety control circuit 14 in the safety control system 1 of the present disclosure may be directly connected to the main control board 16 and the servo circuit 15, which may improve the integration degree of the safety control system 1, simplify the complicated circuitry of the safety control system 1, and reduce the production cost. In addition, the main control board 16 and the safety control circuit 14 may be connected through a communication bus to transmit numerous data information including at least the moving information of the left wheel and the right wheel of the mobile robot, the operating mode selection information, the monitoring area switching signal, the reset information, and the start signal, etc., as well as to facilitate the integration of the safety control system 1, such that the safety control system 1 can be integrated in the control cabinet of the mobile robot, thereby improving the integration of the safety control system 1 while reducing the production costs.

The present disclosure further provides a mobile robot, referring FIG. 8, which is a structural schematic diagram of a mobile robot according to some embodiments of the present disclosure. As shown in FIG. 8, the mobile robot 20 includes a main body 21, multiple mobile devices 22, and a safety control system 23. The safety control system 23 may be the safety control system 1 described in any of the above embodiments, which will not be repeated herein.

Specifically, the multiple mobile devices 22 are arranged at a bottom and/or a top of the main body 21 for driving the mobile robot 20 in a horizontal direction or a gravity direction. For example, a left wheel and a right wheel are arranged at the bottom of the main body 21 for driving the mobile robot 20 in the horizontal direction; or, a lifting device is arranged at the top of the main body 21 for driving the mobile robot 20 in the gravity direction.

The safety control system 23 is connected to a motor of the mobile robot 20 for monitoring the movement state of the mobile device 22 to monitor movement data of the mobile robot 20 and generate a first safety instruction, to monitor whether the mobile robot 20 collides with an obstacle and generate a second safety instruction, to monitor whether an obstacle exists within a preset range of the mobile robot 20 and generate a third safety instruction, and/or to generate a fourth safety instruction based on a state information of the safety input device of the mobile robot 20, for controlling the motor of the mobile robot 20 to execute the corresponding safety instruction based on the first safety instruction, the second safety instruction, the third safety instruction, and/or the fourth safety instruction.

The present disclosure further provides a robot, including: a carrying body, a main body, and a safety control system. The safety control system includes: a first monitoring circuit, a second monitoring circuit, a third monitoring circuit, a safety control circuit, and a servo circuit.

The first monitoring circuit is configured to monitor a movement state of the main body, for monitoring motion data of the main body; the second monitoring circuit is arranged on an outer wall of the main body and configured to generate a collision signal in response to the main body colliding with an obstacle; the third monitoring circuit is configured to monitor whether an obstacle exists within a preset range of the main body and to generate an alarm signal in response to the obstacle being monitored to exist; the safety control circuit is connected to the first monitoring circuit, the second monitoring circuit, the third monitoring circuit, and a safety input device of the robot, and configured to generate a first safety instruction based on the movement data, a second safety instruction based on the collision signal, a third safety instruction based on the alarm signal, and a fourth safety instruction based on state information of the safety input device; the servo circuit is connected to the safety control circuit and configured to receive and execute the first safety instruction, the second safety instruction, the third safety instruction, or the fourth safety instruction output by the safety control circuit; the main control board is connected to the servo circuit and configured to output a drive control signal to the servo circuit, for causing the servo circuit to control a motor of the robot based on the drive control signal.

The main body may be arranged on the carrying body for performing a movement control cooperating with the carrying body.

In some embodiments, at least one of a control cabinet, a main control board, the servo circuit, a servo drive component, and the like of the robot may be arranged on the carrying body.

The main body or a part of the main body may be movable, or to say, mobile. The motion of the main body includes rotation and/or movement, etc.; and the motion data includes rotation data and/or movement data, etc.

In some embodiments, the carrying body may include a mobile device, the mobile device being configured to drive a mobile robot in a horizontal direction or a gravity direction. In the embodiments, the robot is considered as an overall structure including the mobile robot, and the specific working structure and control of the mobile robot can be referred to the above embodiments.

In some embodiments, the carrying body may include a seat body, and the seat body may be fixed to a workbench, etc. to ensure the stability of the seat body during a working process of the robot. In the embodiments, the robot acts as a partially-movable robot, and the main body or a part of the main body may move relative to the seat body. For example, the main body may include a robotic arm, and the robotic arm may move relative to the seat body, or some joints of the robotic arm may move relative to the seat body, etc. The movable part of the main body may further include at least one of a cargo telescoping frame, an extension shaft, an end-effector, and a motor, etc.

The safety control system is connected to the motor of the robot and is configured to monitor a motion state of the main body or a movable part on the main body so as to monitor motion data of the main body or the movable part to generate a first safety instruction and/or to monitor whether the main body or the movable part collides with an obstacle to generate a second safety instruction and/or to monitor whether an obstacle exists within a preset range of the main body or the movable part to generate a third safety instruction, and/or for generating a fourth safety instruction based on the state information of the safety input device of the robot, and/or to controll the motor of the robot to execute the corresponding safety instruction based on the first safety instruction and/or the second safety instruction and/or the third safety instruction and/or the fourth safety instruction. In this manner, the safety control system of the robot is arranged with multiple monitoring circuits and the safety control circuit, thereby realizing the monitoring of the motion state of the robot, whether a collision occurs, and whether an obstacle exists in the preset area, etc., so as to improve the reliability of the safety control of the robot through the monitoring of multiple aspects. On the other hand, the safety control circuit in the safety control system may be connected directly to the servo circuit, which may improve the integration degree of the whole safety control system, simplify the complicated circuit of the safety control system, and reduce the production cost.

The above is only some embodiments of the present disclosure, and is not intended to limit the scope of the present disclosure. Any equivalent structure or equivalent process transformation utilizing the contents of the specification and the accompanying drawings of the present disclosure, or directly or indirectly applying them in other related technical fields, are all reasonably included in the scope of the present disclosure.

## Claims

1. A safety control system for a mobile robot; wherein the mobile robot is provided with at least one mobile device; **characterized in that** the safety control system comprises:
a first monitoring circuit (11), configured to monitor a movement state of the mobile device, so as to monitor movement data of the mobile robot;
a second monitoring circuit (12), arranged on an outer wall of the mobile robot, and configured to generate a collision signal in response to the mobile robot colliding with an obstacle;
a third monitoring circuit (13), configured to monitor whether an obstacle exists within a preset range of the mobile robot and to generate an alarm signal in response to the existence of the obstacle being monitored;
a safety control circuit (14), connected to the first monitoring circuit (11), the second monitoring circuit (12), the third monitoring circuit (13), and to a safety input device of the mobile robot, and configured to generate a first safety instruction based on the movement data, a second safety instruction based on the collision signal, a third safety instruction based on the alarm signal, and a fourth safety instruction based on state information of the safety input device;
a servo circuit (15), connected to the safety control circuit (14), and configured to receive and execute the first safety instruction, the second safety instruction, the third safety instruction, or the fourth safety instruction output by the safety control circuit (14); and
a main control board, connected to the servo circuit (15), and configured to output a drive control signal to the servo circuit (15) to cause the servo circuit (15) to control a motor of the mobile robot based on the drive control signal.

2. The safety control system according to claim 1, wherein the safety control circuit (14) comprises:
an input circuit (141), connected to the safety input device and configured to obtain the state information of the safety input device;
a logic circuit (142), connected to the input circuit (141) and configured to generate the fourth safety instruction based on the state information of the safety input device; and
an output circuit (143), connected to the logic circuit (142) and the servo circuit (15), and configured to transmit the fourth safety instruction to the servo circuit (15).

3. The safety control system according to claim 2, wherein the input circuit (141) is configured to receive an input signal of the safety input device through dual channels;
and/or,
the logic circuit (142) comprises a primary circuit (1421) and a secondary circuit (1422);
the primary circuit (1421) is connected to the input circuit (141) and configured to integrate and process the state information of the safety input device;
the secondary circuit (1422) is connected to the primary circuit (1421) and the output circuit (143)and configured to generate the fourth safety instruction based on the state information and transmit the fourth safety instruction to the output circuit (143).

4. The safety control system according to claim 3, wherein the primary circuit (1421) is connected to the input circuit (141) through dual channels and configured to receive and cross-verify the input signal, or the primary circuit (1421) comprises two primary circuits and each of the two primary circuits is separately connected to the input circuit (141); the two primary circuits (1421) are connected to each other and configured to receive and cross-verify the input signal.

5. The safety control system according to claim 3, wherein the safety input device comprises a plurality of safety input devices; the state information of each safety input device is a pulse signal, and the pulse signals have different waveforms;
the primary circuit (1421) is further configured to integrate the pulse signals to output a signal containing information of the pulse signals;
the secondary circuit (1422) is further configured to receive the signal output from the primary circuit (1421), to determine whether the signal is the same as a signal formed by integrating the pulse signals in a normal state, and to generate the fourth safety instruction in response to the signal being different from the signal formed by integrating the pulse signals in the normal state.

6. The safety control system according to claim 2, wherein the safety control circuit (14) further comprises:
a state monitoring module (144), configured to monitor an operating state of the mobile robot so as to generate a mode switching signal based on the operating state of the mobile robot; and
a mode switching module (145), connected to the state monitoring module (144) and the logic circuit (142), and configured to generate a mode signal based on the mode switching signal; wherein the logic circuit (142) is configured to generate the fourth safety instruction based on the mode signal and the state information of the safety input device.

7. The safety control system according to claim 1, wherein the at least one mobile device comprises a left wheel and a right wheel, and the left wheel and the right wheel are configured to drive the mobile robot to move in a horizontal direction; the first monitoring circuit (11) comprises a first encoder (111) and a second encoder (112), the first encoder (111) being configured to monitor the left wheel, and the second encoder (112) being configured to monitor the right wheel to obtain movement speed information, position information, and direction information of the mobile robot.

8. The safety control system according to claim 7, wherein the safety control circuit (14) further comprises a first diagnostic circuit (146), wherein the first diagnostic circuit (146) is connected to the first encoder (111) and the second encoder (112) and is configured to monitor the movement state of the left wheel and the right wheel based on monitoring data of the first encoder (111) and monitoring data of the second encoder (112).

9. The safety control system according to claim 8, wherein the first encoder (111) comprises a first encoder I (111A) and a first encoder II (111B), and the second encoder (112) comprises a second encoder I (112A) and a second encoder II (112B); the first encoder I (111A) and the first encoder II (111B) have respective independent read heads which are arranged on a same printed circuit board; the second encoder I (112A) and the second encoder II (112B) have respective independent read heads which are arranged on a same printed circuit board.

10. The safety control system according to claim 7, wherein the safety control circuit (14) further comprises:
a decoding circuit (147), connected to the first encoder (111) and the second encoder (112), and configured to decode the monitoring data of the first encoder (111) to obtain a speed signal and a direction signal of the left wheel, and to decode the monitoring data of the second encoder (112) to obtain a speed signal and a direction signal of the right wheel; and
a second diagnostic circuit, connected to the decoding circuit (147) and configured to determine whether the left wheel is abnormal based on the speed signal and/or the direction signal of the left wheel, to determine whether the right wheel is abnormal based on the speed signal and/or the direction signal of the right wheel, and to determine whether the mobile robot is over-speed based on the speed signal of the left wheel and the speed signal of the right wheel.

11. The safety control system according to claim 7, wherein the third monitoring circuit (13) comprises a radar (131), and the safety control circuit (14) further comprises:
a decoding circuit (147), connected to the first encoder (111) and the second encoder (112), and configured to decode the monitoring data of the first encoder (111) to obtain a speed signal and a direction signal of the left wheel, and to decode the monitoring data of the second encoder (112) to obtain a speed signal and a direction signal of the right wheel; and
an area determination circuit (148), connected to the decoding circuit (147) and configured to generate area information based on the speed signal and the direction signal of the left wheel and the speed signal and the direction signal of the right wheel;
wherein the radar (131) is connected to the area determination circuit (148) and configured to switch a preset range of the mobile robot based on the area information.

12. The safety control system according to claim 11, wherein,
the first encoder (111) comprises a first encoder I (111A) and a first encoder II (111B), and the second encoder (112) comprises a second encoder I (112A) and a second encoder II (112B); the first encoder I (111A) and the first encoder II (111B) have respective independent read heads which are arranged on a same printed circuit board; the second encoder I (112A) and the second encoder II (112B) have respective independent read heads which are arranged on a same printed circuit board;
and/or,
the decoding circuit (147) comprises a first decoding circuit (1471), a second decoding circuit (1472), a third decoding circuit (1473), and a fourth decoding circuit (1474); the first decoding circuit (1471) is connected to the first encoder I (111A), the second decoding circuit (1472) is connected to the first encoder II (111B), the third decoding circuit (1473) is connected to the second encoder I (112A), and the fourth decoding circuit (1474) is connected to the second encoder II (112B);
and/or,
the area determination circuit (148) comprises a first area determination circuit and a second area determination circuit;
the first area determination circuit is connected to a first decoding circuit (1471) and a third decoding circuit (1473), and configured to generate first area information based on a speed signal and a direction signal of the left wheel decoded from the first decoding circuit (1471) and a speed signal and a direction signal of the right wheel decoded from the third decoding circuit (1473);
the second area determination circuit is connected to a second decoding circuit (1472) and a fourth decoding circuit (1474), and configured to generate second area information based on a speed signal and a direction signal of the left wheel decoded from the second decoding circuit (1472) and a speed signal and a direction signal of the right wheel decoded from the fourth decoding circuit (1474);
the radar (131) is connected to the first area determination circuit and the second area determination circuit to generate a fault diagnosis signal based on the first area information and the second area information.

13. The safety control system according to claim 1, wherein the at least one mobile device comprises a lifting device, and the lifting device is configured to drive the mobile robot to move in a gravity direction; the first monitoring circuit (11) comprises a third encoder (113), and the third encoder (113) is configured to monitor the lifting device to obtain a lifting height and a rotation angle of the lifting device.

14. The safety control system according to claim 1, wherein the second monitoring circuit (12) comprises at least one of a touch sensor and a collision bar.

15. A mobile robot (20), comprising:
a main body (21);
at least one mobile device (22), arranged at a bottom or a top of the main body (21) and configured to drive the mobile robot (20) to move in a horizontal direction or a gravity direction; and
the safety control system (23) according to any one of claims 1-14, configured to monitor a movement state of the at least one mobile device (22), so as:
to monitor movement data of the mobile robot (20) to generate a first safety instruction,
and/or,
to monitor whether the mobile robot (20) collides with an obstacle to generate a second safety instruction,
and/or,
to monitor whether an obstacle exists within a preset range of the mobile robot (20) to generate a third safety instruction,
and/or,
to generate a fourth safety instruction based on a state information of a safety input device of the mobile robot (20),
and/or,
to control a motor of the mobile robot (20) to execute a corresponding safety instruction based on the first safety instruction and/or the second safety instruction and/or the third safety instruction and/or the fourth safety instruction.
